# EUROPEAN PATENT APPLICATION

(11) **EP 4 296 634 A1**
(43) Date of publication of application: **27.12.2023**
(21) Application number: 22756053.9
(22) Date of filing: 09.02.2022
(51) Int. Cl.: G01J 1/02, G01V 8/10, G01J 5/48

(54) **PERSON-DETECTING SYSTEM, DETECTION METHOD, AND PROGRAM**

(30) Priority: 22.02.2021 JP 2021025787
(71) Applicant: Panasonic Intellectual Property Management Co., Ltd., Osaka-shi, Osaka 540-6207 (JP)
(72) Inventor: KAMIIZUMI, Haruka, Osaka-shi Osaka 540-6207 (JP)
(74) Representative: Novagraaf International SA
(86) International application number: PCT/JP2022/005079
(87) International publication number: WO 2022/176732

(57) **Abstract**

A human detection system (10) includes: an extractor (11) that extracts, at predetermined time intervals, a heat source region equivalent to a human body from heat source regions in a room detected by a heat source detector (20); and a human detector (12) that detects, at the predetermined time intervals, a heat source region of a human body in the room, and the human detector (12) calculates a first heat source region by deleting an overlapping region of the latest human body-equivalent heat source region and the preceding human body-equivalent heat source region from the latest human body-equivalent heat source region, the latest human body-equivalent heat source region being a heat source region equivalent to a human body that is currently extracted by the extractor (11), the preceding human body-equivalent heat source region being a heat source region equivalent to a human body that is previously extracted by the extractor (11), calculates a second heat source region by adding the first heat source region calculated and a human body heat source region being a heat source region of a human body that is previously detected by the human detector (12), calculates a third heat source region being an overlapping region of the latest human body-equivalent heat source region and the second heat source region calculated, and detects the third heat source region calculated as the heat source region of a human body in the room.

## Description

### [Technical Field]

The present disclosure relates to a human detection system which detects a person in a room, a human detection method, and a program.

### [Background Art]

Conventionally, techniques on an air conditioner and the like are disclosed which use a thermal image sensor to detect a person and thereby realize an indoor environment where the detected person can stay comfortably (for example, Patent Literature (PTL) 1).

### [Citation List]

### [Patent Literature]

[PTL 1] Japanese Unexamined Patent Application Publication No. 2012-202793

### [Summary of Invention]

### [Technical Problem]

For example, in a thermal image sensor, a heat source, such as a television or a lighting device, which has a temperature equivalent to a human body can also be detected as a person. On the other hand, although a motion filter can be used to prevent a stationary heat source equivalent to a human body from being detected, a stationary person is also prevented from being detected.

The present disclosure provides a human detection system which can detect a stationary person in a room and the like.

### [Solution to Problem]

A human detection system in the present disclosure is a human detection system that detects a person in a room, and includes: an extractor that extracts, at predetermined time intervals, a heat source region equivalent to a human body from heat source regions in the room detected by a heat source detector; and a human detector that detects, at the predetermined time intervals, a heat source region of a human body in the room, and the human detector: calculates a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted by the extractor, the preceding human body-equivalent heat source region being a heat source region equivalent to a human body that is previously extracted by the extractor; calculates a second heat source region by adding the first heat source region calculated and a preceding human body heat source region, the preceding human body heat source region being a heat source region of a human body that is previously detected by the human detector; calculates a third heat source region that is an overlapping region of the latest human body-equivalent heat source region and the second heat source region calculated; and detects the third heat source region calculated as the heat source region of a human body in the room.

A human detection method in the present disclosure is a human detection method for detecting an existence region of a person in a room, and includes: extracting, at predetermined time intervals, a heat source region equivalent to a human body from heat source regions in the room detected by a heat source detector; and detecting, at the predetermined time intervals, a heat source region of a human body, and the detecting includes: calculating a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted in the extracting, the preceding human body-equivalent heat source region being a heat source region equivalent to a human body that is previously extracted in the extracting; calculating a second heat source region by adding the first heat source region calculated and a preceding human body heat source region, the preceding human body heat source region being a heat source region of a human body that is previously detected in the detecting; calculating a third heat source region that is an overlapping region of the latest human body-equivalent heat source region and the second heat source region calculated; and detecting the third heat source region calculated as the heat source region of a human body in the room.

A program in the present disclosure is a program for causing a computer to perform the human detection method described above.

### [Advantageous Effects of Invention]

According to a human detection system and the like in the present disclosure, it is possible to detect a stationary person in a room.

### [Brief Description of Drawings]

[FIG. 1]

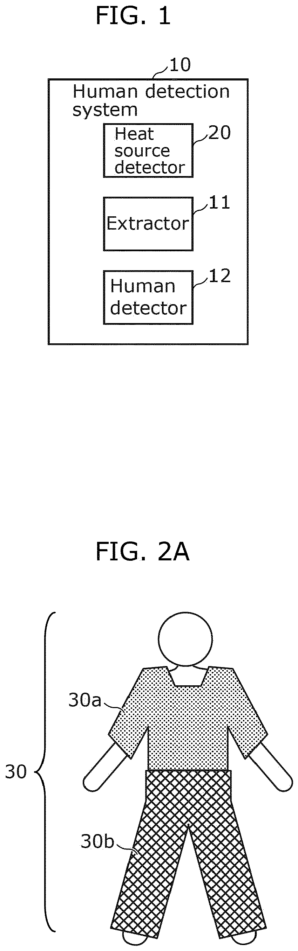

   FIG. 1 is a diagram showing an example of the configuration of a human detection system according to an embodiment.
[FIG. 2A]
   FIG. 2A is a diagram showing an example of a person detected by a heat source detector.
[FIG. 2B]

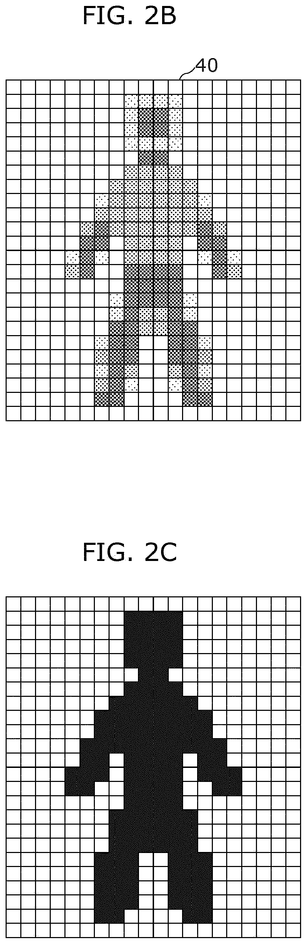

   FIG. 2B is a diagram showing an example of a thermal image including the person which is acquired by the heat source detector.
[FIG. 2C]
   FIG. 2C is a diagram showing an example of a heat source region equivalent to a human body which is extracted by an extractor.
[FIG. 3]

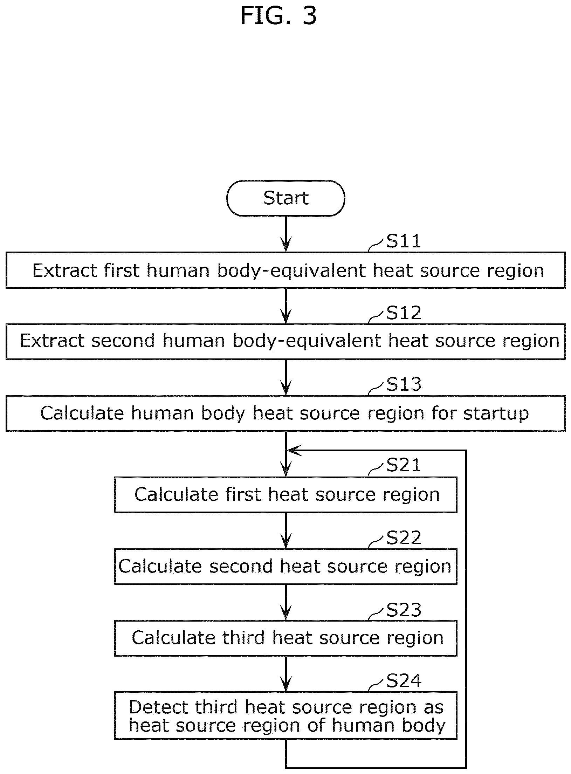

   FIG. 3 is a flowchart showing an example of the operation of the human detection system according to the embodiment.
[FIG. 4A]

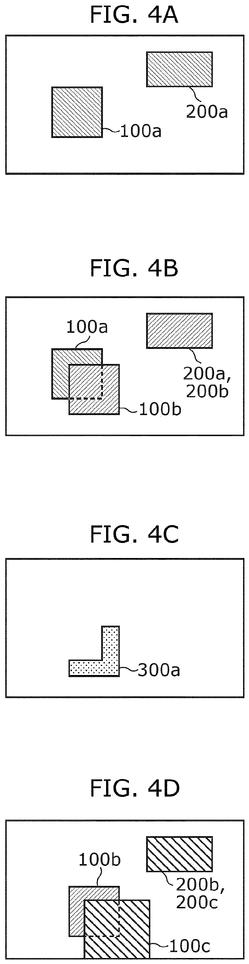

   FIG. 4A is a diagram showing an example of a first human body-equivalent heat source region.
[FIG. 4B]
   FIG. 4B is a diagram showing an example of a second human body-equivalent heat source region and the first human body-equivalent heat source region.
[FIG. 4C]
   FIG. 4C is a diagram showing an example of a human body heat source region for startup.
[FIG. 4D]
   FIG. 4D is a diagram showing an example of the latest human body-equivalent heat source region and the second human body-equivalent heat source region.
[FIG. 4E]

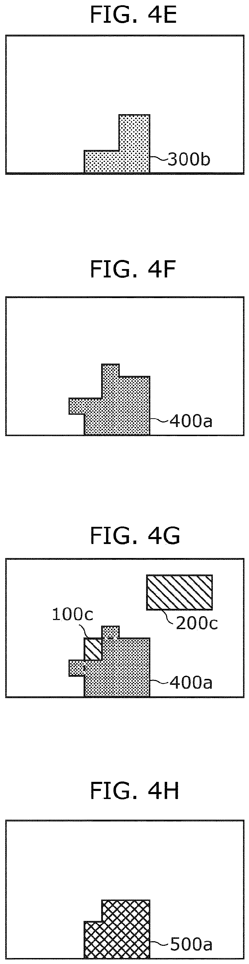

   FIG. 4E is a diagram showing an example of a first heat source region.
[FIG. 4F]
   FIG. 4F is a diagram showing an example of a second heat source region.
[FIG. 4G]
   FIG. 4G is a diagram showing an example of the latest human body-equivalent heat source region and the second heat source region.
[FIG. 4H]
   FIG. 4H is a diagram showing an example of a third heat source region.
[FIG. 5A]

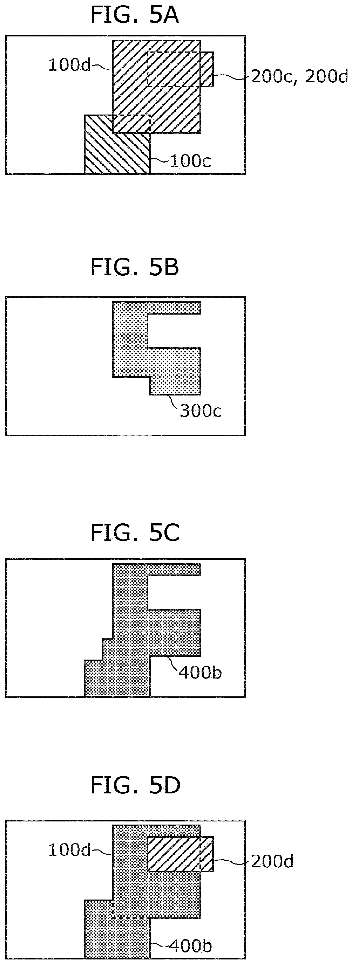

   FIG. 5A is a diagram showing an example of the preceding human body-equivalent heat source region and the latest human body-equivalent heat source region.
[FIG. 5B]
   FIG. 5B is a diagram showing an example of the first heat source region.
[FIG. 5C]
   FIG. 5C is a diagram showing an example of the second heat source region.
[FIG. 5D]
   FIG. 5D is a diagram showing an example of the latest human body-equivalent heat source region and the second heat source region.
[FIG. 5E]

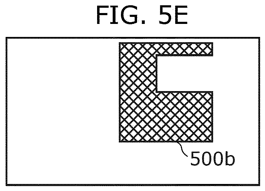

   FIG. 5E is a diagram showing an example of the third heat source region.

### [Description of Embodiments]

Embodiments will be described in detail below with reference to drawings as necessary. However, a detailed description beyond necessity may be omitted. For example, a detailed description of an already well known matter or a repeated description of substantially the same configuration may be omitted. This is intended to prevent the following description from being unnecessarily redundant and facilitate the understanding of a person skilled in the art.

The inventor provides the accompanying drawings and the following description so that the person skilled in the art fully understands the present disclosure, and they are not intended to limit the subject matter of the claims.

### (Embodiment)

A human detection system according to an embodiment will be described below with reference to FIGS. 1 to 5E.

FIG. 1 is a diagram showing an example of the configuration of human detection system 10 according to the embodiment.

Human detection system 10 is a system which detects a person in a room, and is installed in, for example, an air conditioner or the like. Human detection system 10 is a computer which includes a processor, a memory, and the like. The memory includes a read only memory (ROM), a random access memory (RAM), and the like, and can store programs which are executed by the processor. Human detection system 10 includes extractor 11, human detector 12, and heat source detector 20. Extractor 11 and human detector 12 are realized by the processor for executing the programs stored in the memory and the like. Human detection system 10 may be a device in which its constituent elements are provided in one housing or may be a system in which its constituent elements are distributed and arranged in a plurality of housings.

Heat source detector 20 includes an infrared sensor, and scans the interior of the room using the infrared sensor to detect a heat source region (region where a heat source exists) in the room at predetermined time intervals. Although the predetermined time interval is not particularly limited, the predetermined time interval is, for example, one second. Heat source detector 20 outputs a thermal image in which the heat source region appears as a heat distribution or data for generating a thermal image.

Here, heat source detector 20 will be described with reference to FIGS. 2A and 2B.

FIG. 2A is a diagram showing an example of a person detected by heat source detector 20. FIG. 2B is a diagram showing an example of a thermal image including the person which is acquired by heat source detector 20.

Heat source detector 20 has a viewing angle φ in a left/right direction, and can acquire a two-dimensional thermal image of an object existing in a space in front of heat source detector 20. Heat source detector 20 also has a viewing angle in an up/down direction, and can capture the existence of a person in the space in front of heat source detector 20. Heat source detector 20 includes, for example, a group of pixels arranged in a two-dimensional matrix to have a structure capable of acquiring a two-dimensional thermal image at a time. In addition to the structure described above, for example, heat source detector 20 may include a group of pixels (line sensor) arranged one-dimensionally, and in this case, heat source detector 20 may have a structure in which the group of pixels are scanned one-dimensionally and thus a two-dimensional thermal image is acquired. Heat source detector 20 may also have a structure in which one or more pixels are provided and are scanned two-dimensionally and thus a two-dimensional thermal image is acquired.

When person 30 exists in the space of the viewing angle φ in front of heat source detector 20 as shown in FIG. 2A, heat source detector 20 acquires thermal image 40 including a temperature distribution of person 30 as shown in FIG. 2B.

In thermal image 40, a part (pixel) of the object in the space which has a higher temperature is displayed to have a higher density. In FIG. 2B, a pixel having a higher temperature is displayed to have a higher density. A method of displaying the thermal image is not limited to the method described above.

Person 30 shown in FIG. 2A wears jacket 30a and pants 30b. The surface temperatures of jacket 30a and pants 30b are close to an ambient temperature. Hence, for example, when the ambient temperature is a room temperature of about 25°C, on the surface temperatures of person 30 detected by heat source detector 20, the surface temperatures of parts of jacket 30a and pants 30b are lower than those of the other parts (the face, the neck and the arms) where skin is exposed. Therefore, as compared with the surface temperatures of the parts where the skin is exposed, the surface temperatures of jacket 30a and pants 30b are displayed to have low relative densities (colors close to the colors of the surrounding pixels). In the temperature environment described above, since the ambient temperature is lower than the temperatures of the surfaces of the clothes, when an object which has a temperature less than or equal to the ambient temperature does not exist inside the viewing angle φ, the region other than the person of thermal image 40 has the lowest density. For example, when the room temperature is about 25°C, the average skin temperature of the face is about 33°C, the temperature of jacket 30a is about 27°C, the temperature of the arms (exposed parts) is about 30°C, and the temperature of pants 30b is about 28°C, a temperature distribution as shown in thermal image 40 is provided. However, the temperatures of the surfaces of the clothes such as jacket 30a and pants 30b depend on the materials, the thicknesses, and the like of the clothes, and thus the temperatures thereof may be other temperatures.

Extractor 11 extracts, at the predetermined time intervals, a heat source region equivalent to a human body from heat source regions in the room (in other words, heat source regions in the thermal image) detected by heat source detector 20. Although the heat source region equivalent to a human body is a region where a heat source of, for example, 25°C to 40°C exists and includes a region where a person exists, the heat source region equivalent to a human body can include a region where a heat source such as a television or a lighting device exists. The details of the operation of extractor 11 will be described later, and a heat source region equivalent to a human body which is extracted by extractor 11 from thermal image 40 shown in FIG. 2B will be described with reference to FIG. 2C.

FIG. 2C is a diagram showing an example of the heat source region equivalent to a human body which is extracted by extractor 11.

In FIG. 2C, a heat source region equivalent to a human body is assumed to be a region where a heat source of, for example, 25°C to 40°C exists, and an example of the heat source region equivalent to a human body which is extracted from thermal image 40 shown in FIG. 2B and acquired by heat source detector 20 is shown. In FIG. 2C, the region where a heat source of, for example, 25°C to 40°C exists is displayed in black. In heat source detector 20, threshold values such as 25°C and 40°C may be set, and thus heat source detector 20 may extract the heat source region equivalent to a human body as shown in FIG. 2C.

Human detector 12 detects, at the predetermined time intervals, a heat source region of a human body in the room. The heat source region of a human body is different from a heat source region equivalent to a human body, and is a region which is determined as a region where not a heat source such as a television or a lighting device but a person exists. The details of the operation of human detector 12 will be described later.

The details of the operation of human detection system 10 will then be described with reference to FIG. 3.

FIG. 3 is a flowchart showing an example of the operation of human detection system 10 according to the embodiment. In FIG. 3, an operation at the startup of human detection system 10 and the subsequent operation are shown. In FIG. 3, processing from step S11 to step S13 is performed only at the startup, and thereafter processing from step S21 to step S24 is repeatedly performed.

After the startup of human detection system 10, heat source detector 20 first detects heat source regions in the room, and extractor 11 extracts a first human body-equivalent heat source region from the heat source regions detected by heat source detector 20 (step S11). The first human body-equivalent heat source region is a heat source region equivalent to a human body that is extracted by extractor 11 for the first time after the startup of human detection system 10. A specific example of the first human body-equivalent heat source region will be described with reference to FIG. 4A.

FIG. 4A is a diagram showing an example of the first human body-equivalent heat source region. In FIG. 4A, first human body-equivalent heat source regions 100a and 200a extracted by extractor 11 in the thermal image are shown. In the following description, for ease of description, heat source regions corresponding to the shape of a person are schematically shown as quadrangles.

For example, first human body-equivalent heat source region 100a is assumed to be a heat source region corresponding to a person existing in the room, and first human body-equivalent heat source region 200a is assumed to be a heat source region corresponding to a television installed in the room. However, in the thermal image, first human body-equivalent heat source regions 100a and 200a each appear as heat source regions in the same temperature range, and thus in the thermal image shown in FIG. 4A, it is difficult for human detection system 10 to distinguish whether first human body-equivalent heat source regions 100a and 200a are the heat sources of persons or the other heat sources.

Returning to the description of FIG. 3, after the predetermined time interval, heat source detector 20 detects heat source regions in the room, and extractor 11 extracts a second human body-equivalent heat source region from the heat source regions detected by heat source detector 20 (step S12). The second human body-equivalent heat source region is a heat source region equivalent to a human body which is subsequently extracted by extractor 11 after the extraction of the first human body-equivalent heat source region. A specific example of the second human body-equivalent heat source region will be described with reference to FIG. 4B.

FIG. 4B is a diagram showing an example of the second human body-equivalent heat source region and the first human body-equivalent heat source region. In FIG. 4B, second human body-equivalent heat source regions 100b and 200b and first human body-equivalent heat source regions 100a and 200a extracted by extractor 11 in the thermal image are shown.

Second human body-equivalent heat source region 100b is a heat source region corresponding to a person existing in the room, and second human body-equivalent heat source region 200b is a heat source region corresponding to a television installed in the room. It is found that second human body-equivalent heat source region 100b is displaced from first human body-equivalent heat source region 100a. This means that a heat source located in a position corresponding to first human body-equivalent heat source region 100a in the room moves to a position corresponding to second human body-equivalent heat source region 100b after the elapse of the predetermined time interval, and the heat source is a moving heat source, that is, a person. On the other hand, it is found that second human body-equivalent heat source region 200b is located in the same position as second human body-equivalent heat source region 200a. This means that a heat source located in a position corresponding to first human body-equivalent heat source region 200a in the room does not move even after the elapse of the predetermined time interval, and the heat source is a stationary heat source, that is, a television or the like.

Returning to the description of FIG. 3, human detector 12 then calculates a human body heat source region for startup by deleting an overlapping region of the first human body-equivalent heat source region and the second human body-equivalent heat source region from the second human body-equivalent heat source region (step S13). In other words, human detector 12 calculates a heat source region of the second human body-equivalent heat source region which does not overlap the first human body-equivalent heat source region. The overlapping region of the two regions is an AND region of the two regions. A specific example of the human body heat source region for startup will be described with reference to FIG. 4C.

FIG. 4C is a diagram showing an example of the human body heat source region for startup. In FIG. 4C, human body heat source region for startup 300a in the thermal image is shown.

It is found that as shown in FIGS. 4B and 4C, human body heat source region for startup 300a is a heat source region of second human body-equivalent heat source region 100b which does not overlap first human body-equivalent heat source region 100a. Since human body heat source region for startup 300a is a region produced by a moving heat source (that is, a moving person), human body heat source region for startup 300a is said to be part of a heat source region of a human body at present. Since first human body-equivalent heat source region 200a and second human body-equivalent heat source region 200b completely overlap each other, a human body heat source region for startup corresponding to second human body-equivalent heat source region 200b does not exist.

Returning to the description of FIG. 3, after the further predetermined time interval, heat source detector 20 detects a heat source region in the room, and human detector 12 calculates a first heat source region (step S21). The first heat source region is a region which is obtained by deleting an overlapping region of the latest human body-equivalent heat source region and the preceding human body-equivalent heat source region from the latest human body-equivalent heat source region. The latest human body-equivalent heat source region is a heat source region equivalent to a human body which is currently extracted by extractor 11, and is a heat source region equivalent to a human body at this point which is extracted the predetermined time interval after the extraction of the second human body-equivalent heat source region. The preceding human body-equivalent heat source region is a heat source region equivalent to a human body which is previously extracted by extractor 11, and is the second human body-equivalent heat source region at this point. A specific example of the latest human body-equivalent heat source region will be described with reference to FIG. 4D, and a specific example of the first heat source region will be described with reference to FIG. 4E.

FIG. 4D is a diagram showing an example of the latest human body-equivalent heat source region and the second human body-equivalent heat source region. In FIG. 4D, latest human body-equivalent heat source regions 100c and 200c and second human body-equivalent heat source regions 100b and 200b extracted by extractor 11 in the thermal image are shown.

FIG. 4E is a diagram showing an example of the first heat source region. In FIG. 4E, first heat source region 300b in the thermal image is shown.

Latest human body-equivalent heat source region 100c is a heat source region corresponding to a person existing in the room, and latest human body-equivalent heat source region 200c is a heat source region corresponding to a television installed in the room. It is found that latest human body-equivalent heat source region 100c is displaced from second human body-equivalent heat source region 100b. This means that a heat source located in a position corresponding to second human body-equivalent heat source region 100b in the room moves to a position corresponding to latest human body-equivalent heat source region 100c after the elapse of the predetermined time interval, and the heat source is a moving heat source, that is, a person. On the other hand, it is found that latest human body-equivalent heat source region 200c is located in the same position as second human body-equivalent heat source region 200b. This means that a heat source located in a position corresponding to second human body-equivalent heat source region 200b in the room does not move even after the elapse of the predetermined time interval, and the heat source is a stationary heat source, that is, a television or the like.

It is found that as shown in FIGS. 4D and 4E, first heat source region 300b is a heat source region of latest human body-equivalent heat source region 100c which does not overlap second human body-equivalent heat source region 100b. Since first heat source region 300b is a region produced by a moving heat source (that is, a moving person), first heat source region 300b is said to be part of a heat source region of a human body at present. Since second human body-equivalent heat source region 200b and latest human body-equivalent heat source region 200c completely overlap each other, a first heat source region corresponding to latest human body-equivalent heat source region 200c does not exist.

Returning to the description of FIG. 3, human detector 12 then calculates a second heat source region (step S22). The second heat source region is a region which is obtained by adding the first heat source region calculated by human detector 12 in step S21 and the preceding human body heat source region. The region obtained by adding the two regions is an OR region of the two regions. The preceding human body heat source region is a heat source region of a human body which is previously detected by human detector 12, and is the human body heat source region for startup at the startup of human detection system 10. At the startup of human detection system 10, a heat source region of a human body has not been detected yet, and thus the human body heat source region for startup is used as the preceding human body heat source region. A specific example of the second heat source region will be described with reference to FIG. 4F.

FIG. 4F is a diagram showing an example of the second heat source region. In FIG. 4F, second heat source region 400a in the thermal image is shown.

It is found that as shown in FIGS. 4C, 4E, and 4F, second heat source region 400a is a region which is obtained by adding first heat source region 300b and the preceding human body heat source region (human body heat source region for startup 300a).

Returning to the description of FIG. 3, human detector 12 then calculates a third heat source region (step S23). The third heat source region is an overlapping region of the latest human body-equivalent heat source region and the second heat source region calculated by human detector 12 in step S22. A specific example of the third heat source region will be described with reference to FIGS. 4G and 4H.

FIG. 4G is a diagram showing an example of the latest human body-equivalent heat source region and the second heat source region. In FIG. 4G, latest human body-equivalent heat source regions 100c and 200c extracted by extractor 11 in the thermal image and second heat source region 400a are shown.

FIG. 4H is a diagram showing an example of the third heat source region. In FIG. 4H, third heat source region 500a in the thermal image is shown.

It is found that as shown in FIGS. 4G and 4H, third heat source region 500a is a heat source region of latest human body-equivalent heat source region 100c which overlaps second heat source region 400a. Since latest human body-equivalent heat source region 200c does not overlap second heat source region 400a, a third heat source region corresponding to latest human body-equivalent heat source region 200c does not exist.

Returning to the description of FIG. 3, human detector 12 detects the third heat source region calculated in step S23 as a heat source region of a human body in the room (step S24). The heat source region of a human body which is detected is used, in step S22 to be subsequently performed, as the preceding human body heat source region. There is a case where as shown in FIG. 4H, third heat source region 500a has a missing region in the shape of a person (here, a schematically shown quadrangle). In such a case, human detector 12 may perform processing for filling the missing region by expanding and then shrinking the third heat source region. The processing described above can be realized by morphology transformation or the like. Human detector 12 outputs the result of the detection of the heat source region of a human body. For example, the result of the detection which is output is used for the control of an air conditioner and the like.

Thereafter, the processing from step S21 to step S24 is performed at the predetermined time intervals. Here, the processing from step S21 to step S24 which is followed after the processing from step S11 to step S24 is performed after the startup of human detection system 10 will be described.

After the predetermined time interval, heat source detector 20 detects a heat source region in the room, and human detector 12 calculates the first heat source region (step S21). As described above, the first heat source region is a region which is obtained by deleting the overlapping region of the latest human body-equivalent heat source region and the preceding human body-equivalent heat source region from the latest human body-equivalent heat source region. The latest human body-equivalent heat source region at this point is a heat source region equivalent to a human body which is extracted the predetermined time interval after the heat source region equivalent to a human body is previously extracted by extractor 11, and the preceding human body-equivalent heat source region at this point is the heat source region equivalent to a human body which is previously extracted by extractor 11. A specific example of the preceding human body-equivalent heat source region and the latest human body-equivalent heat source region at this point will be described with reference to FIG. 5A, and a specific example of the first heat source region will be described with reference to FIG. 5B.

FIG. 5A is a diagram showing an example of the preceding human body-equivalent heat source region and the latest human body-equivalent heat source region. In FIG. 5A, latest human body-equivalent heat source regions 100d and 200d and preceding human body-equivalent heat source regions 100c and 200c extracted by extractor 11 in the thermal image are shown. Preceding human body-equivalent heat source regions 100c and 200c are the human body-equivalent heat source regions which were the latest the predetermined time interval before.

FIG. 5B is a diagram showing an example of the first heat source region. In FIG. 5B, first heat source region 300c in the thermal image is shown.

Latest human body-equivalent heat source region 100d is a heat source region corresponding to a person existing in the room, and latest human body-equivalent heat source region 200d is a heat source region corresponding to a television installed in the room. It is found that latest human body-equivalent heat source region 100d is displaced from preceding human body-equivalent heat source region 100c. This means that a heat source located in a position corresponding to preceding human body-equivalent heat source region 100c in the room moves to a position corresponding to latest human body-equivalent heat source region 100d after the elapse of the predetermined time interval, and the heat source is a moving heat source, that is, a person. On the other hand, it is found that latest human body-equivalent heat source region 200d is located in the same position as preceding human body-equivalent heat source region 200c. This means that a heat source located in a position corresponding to preceding human body-equivalent heat source region 200c in the room does not move even after the elapse of the predetermined time interval, and the heat source is a stationary heat source, that is, a television or the like.

It is found that as shown in FIGS. 5A and 5B, first heat source region 300c is a heat source region of latest human body-equivalent heat source region 100d which does not overlap preceding human body-equivalent heat source region 100c. Since first heat source region 300c is a region produced by a moving heat source (that is, a moving person), first heat source region 300c is said to be part of a heat source region of a human body at present. Since preceding human body-equivalent heat source region 200c and latest human body-equivalent heat source region 200d completely overlap each other, a first heat source region corresponding to latest human body-equivalent heat source region 200d does not exist. Since latest human body-equivalent heat source region 100d also overlaps preceding human body-equivalent heat source region 200c, in first heat source region 300c, the part of preceding human body-equivalent heat source region 200c is missing.

Returning to the description of FIG. 3, human detector 12 then calculates the second heat source region (step S22). As described above, the second heat source region is a region which is obtained by adding the first heat source region calculated by human detector 12 in step S21 and the preceding human body heat source region. The preceding human body heat source region at this point is the heat source region of a human body which is previously detected by human detector 12, and is the heat source region of a human body which is previously detected in step S24 (the third heat source region previously calculated in step S23). A specific example of the second heat source region at this point will be described with reference to FIG. 5C.

FIG. 5C is a diagram showing an example of the second heat source region. In FIG. 5C, second heat source region 400b in the thermal image is shown.

It is found that as shown in FIGS. 4H, 5B, and 5C, second heat source region 400b is a region which is obtained by adding first heat source region 300c and the preceding human body heat source region (third heat source region 500a).

Returning to the description of FIG. 3, human detector 12 then calculates the third heat source region (step S23). As described above, the third heat source region is the overlapping region of the latest human body-equivalent heat source region and the second heat source region calculated by human detector 12 in step S22. A specific example of the third heat source region at this point will be described with reference to FIGS. 5D and 5H.

FIG. 5D is a diagram showing an example of the latest human body-equivalent heat source region and the second heat source region. In FIG. 5D, latest human body-equivalent heat source regions 100d and 200d extracted by extractor 11 in the thermal image and second heat source region 400b are shown.

FIG. 5E is a diagram showing an example of the third heat source region. In FIG. 5E, third heat source region 500b in the thermal image is shown.

It is found that as shown in FIGS. 5D and 5E, third heat source region 500b is a heat source region of latest human body-equivalent heat source region 100d which overlaps second heat source region 400b. Since the preceding human body heat source region (third heat source region 500a) is included in second heat source region 400b, third heat source region 500b includes the heat source region of the human body of a person who is stationary after being previously detected as the heat source region of a human body. Since latest human body-equivalent heat source region 200d does not overlap second heat source region 400b, a third heat source region corresponding to latest human body-equivalent heat source region 200d does not exist.

Returning to the description of FIG. 3, human detector 12 detects the third heat source region calculated in step S23 as a heat source region of a human body in the room (step S24). The heat source region of a human body which is detected is used, in step S22 to be subsequently performed, as the preceding human body heat source region.

As described above, human detection system 10 is a system that detects a person in a room, and includes: extractor 11 that extracts, at predetermined time intervals, a heat source region equivalent to a human body from heat source regions in the room detected by heat source detector 20; and human detector 12 that detects, at the predetermined time intervals, a heat source region of a human body in the room. Human detector 12 calculates a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted by extractor 11, the preceding human body-equivalent heat source region being a heat source region equivalent to a human body that is previously extracted by extractor 11, calculates a second heat source region by adding the first heat source region calculated and a human body heat source region being a heat source region of a human body that is previously detected by human detector 12, calculates a third heat source region that is an overlapping region of the latest human body-equivalent heat source region and the second heat source region calculated, and detects the third heat source region calculated as the heat source region of a human body in the room.

In this way, the first heat source region obtained by deleting the overlapping region of the latest human body-equivalent heat source region and the preceding human body-equivalent heat source region from the latest human body-equivalent heat source region is calculated, and thus a stationary heat source (for example, a television, a lighting device, or the like) equivalent to a human body can be prevented from being detected as a person. However, the first heat source region is only calculated, and thus a stationary person is also prevented from being detected. Hence, the second heat source region obtained by adding the first heat source region and the preceding human body heat source region is calculated, and thus the second heat source region is used to calculate the third heat source region which is detected as a heat source region of a human body. Since the second heat source region includes the heat source region of a human body which is previously detected, even when in the calculation of the first heat source region, a heat source region corresponding to a stationary person is deleted, the third heat source region which is the overlapping region of the preceding human body-equivalent heat source region included in the second heat source region and the latest human body-equivalent heat source region can be calculated as a heat source region of a heat source which is stationary after moving. Hence, in the room, a heat source, such as a television, equivalent to a human body is prevented from being detected as a person, and a moving person and a person who is stationary after moving can be detected. For example, a heat source region of a human body is detected, and thus it is possible to estimate the body temperature of a person from the surface temperature of the person and to estimate hot and cold sensations, with the result that the estimations described above can be used to control an air conditioner and the like.

For example, at startup of human detection system 10, human detector 12 may calculate a human body heat source region for startup by deleting an overlapping region of a first human body-equivalent heat source region and a second human body-equivalent heat source region from the second human body-equivalent heat source region, the first human body-equivalent heat source region being a heat source region equivalent to a human body that is extracted by extractor 10 for a first time after the startup of human detection system 10, the second human body-equivalent heat source region being a heat source region equivalent to a human body that is subsequently extracted by extractor 10, and may detect the heat source region of a human body in the room by using the second human body-equivalent heat source region as the preceding human body-equivalent heat source region and the human body heat source region for startup as the preceding human body heat source region.

In this way, since the preceding human body heat source region does not exist at the startup of human detection system 10, the human body heat source region for startup is used as the preceding human body heat source region, and thus it is possible to detect a heat source region of a human body. Thereafter, the heat source region of a human body which is detected can be used as the preceding human body heat source region.

For example, when the third heat source region calculated has a missing region in the shape of a person, human detector 12 may perform processing for filling the missing region by expanding and then shrinking the third heat source region.

In this way, even when the third heat source region has a missing region in the shape of a person, the third heat source region can be corrected to the shape of the person.

### (Other embodiments)

As examples of techniques disclosed in the present application, the embodiment has been described above. However, the techniques in the present disclosure are not limited to the embodiment, and can be applied to embodiments obtained by performing change, replacement, addition, omission, and the like as necessary. The constituent elements described in the embodiment can be combined to form new embodiments.

For example, although in the embodiment described above, the example is described where human detection system 10 is installed in an air conditioner or the like, among the constituent elements of human detection system 10, only heat source detector 20 may be installed in the air conditioner or the like, and the other constituent elements of human detection system 10 do not need to be installed in the air conditioner or the like. In this case, the other constituent elements of human detection system 10 may be arranged in a server or the like.

For example, although in the embodiment described above, the example is described where human detection system 10 includes heat source detector 20, human detection system 10 does not need to include heat source detector 20. In this case, human detection system 10 acquires a thermal image or data for generating a thermal image from heat source detector 20 provided outside human detection system 10.

For example, the present disclosure can be realized not only as human detection system 10 but also as a human detection method which includes steps (processing) performed by the constituent elements of human detection system 10.

Specifically, the human detection method is a human detection method for detecting an existence region of a person in a room, and includes: extracting, at predetermined time intervals, a heat source region equivalent to a human body from heat source regions in the room detected by a heat source detector; and detecting, at the predetermined time intervals, a heat source region of a human body. As shown in FIG. 3, the detecting includes: a first step (step S21) of calculating a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted in the extracting, the preceding human body-equivalent heat source region being a heat source region equivalent to a human body that is previously extracted in the extracting; a second step (step S22) of calculating a second heat source region by adding the first heat source region calculated and a preceding human body heat source region, the preceding human body heat source region being a heat source region of a human body that is previously detected in the detecting; a third step (step S23) of calculating a third heat source region that is an overlapping region of the latest human body-equivalent heat source region and the second heat source region calculated; and a fourth step (step S24) of detecting the third heat source region calculated as the heat source region of a human body in the room.

For example, the human detection method may be performed by a computer (computer system). Then, the present disclosure can be realized as programs for causing the computer to perform the steps included in the human detection method. Furthermore, the present disclosure can be realized as a non-transitory computer-readable recording medium, such as a CD-ROM, in which the programs are recorded.

For example, when the present disclosure is realized by the programs (software), hardware resources such as the CPU, the memory, the input-output circuit, and the like of the computer are utilized to execute the programs, and thus the steps are performed. Specifically, the CPU acquires data from the memory, the input-output circuit, or the like to perform computation, outputs the result of the computation to the memory, the input-output circuit, or the like, and thereby performs the steps.

The constituent elements included in human detection system 10 of the embodiment described above may be realized as a large scale integration (LSI) circuit which is an integrated circuit (IC).

The integrated circuit is not limited to the LSI circuit, and may be realized by a dedicated circuit or a general-purpose processor. An FPGA which can be programed or a reconfigurable processor in which the connection and the setting of circuit cells inside an LSI circuit can be reconfigured may be utilized.

Furthermore, when a technique for forming an integrated circuit appears which replaces the LSI by advances in semiconductor technology or another derived technique, the technique described above may naturally be used to incorporate the constituent elements included in human detection system 10 into an integrated circuit.

As examples of the techniques in the present disclosure, the embodiments have been described above. Hence, the accompanying drawings and the detailed description are provided.

Thus, the constituent elements described in the accompanying drawings and the detailed description can include not only constituent elements which are essential for solving the problem but also constituent elements which are not essential for solving the problem. Therefore, by the description of the constituent elements which are not essential in the accompanying drawings and the detailed description, the constituent elements which are not essential should not be immediately admitted to be essential.

Since the embodiments described above are intended to illustrate the techniques in the present disclosure, various types of change, replacement, addition, omission, and the like can be performed in the scope of claims or a scope equivalent thereto.

### [Industrial Applicability]

The present disclosure can be applied to a system for detecting a person in a room and the like.

### [Reference Signs List]

10 human detection system
11 extractor
12 human detector
20 heat source detector
30 person
30a jacket
30b pants
40 thermal image
100a, 100b, 100c, 100d, 200a, 200b, 200c, 200d human body-equivalent heat source region
300a human body heat source region for startup
300b, 300c first heat source region
400a, 400b second heat source region
500a, 500b third heat source region

## Claims

1. A human detection system that detects a person in a room, the human detection system comprising:
an extractor that extracts, at predetermined time intervals, a heat source region equivalent to a human body from heat source regions in the room detected by a heat source detector; and
a human detector that detects, at the predetermined time intervals, a heat source region of a human body in the room,
wherein the human detector:
calculates a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted by the extractor, the preceding human body-equivalent heat source region being a heat source region equivalent to a human body that is previously extracted by the extractor;
calculates a second heat source region by adding the first heat source region calculated and a preceding human body heat source region, the preceding human body heat source region being a heat source region of a human body that is previously detected by the human detector;
calculates a third heat source region that is an overlapping region of the latest human body-equivalent heat source region and the second heat source region calculated; and
detects the third heat source region calculated as the heat source region of a human body in the room.

2. The human detection system according to claim 1,
wherein at startup of the human detection system, the human detector:
calculates a human body heat source region for startup by deleting an overlapping region of a first human body-equivalent heat source region and a second human body-equivalent heat source region from the second human body-equivalent heat source region, the first human body-equivalent heat source region being a heat source region equivalent to a human body that is extracted by the extractor for a first time after the startup of the human detection system, the second human body-equivalent heat source region being a heat source region equivalent to a human body that is subsequently extracted by the extractor; and
detects the heat source region of a human body in the room by using the second human body-equivalent heat source region as the preceding human body-equivalent heat source region and the human body heat source region for startup as the preceding human body heat source region.

3. The human detection system according to claim 1 or 2,
wherein when the third heat source region calculated has a missing region in a shape of a person, the human detector performs processing for filling the missing region by expanding and then shrinking the third heat source region.

4. A human detection method for detecting an existence region of a person in a room, the human detection method comprising:
extracting, at predetermined time intervals, a heat source region equivalent to a human body from heat source regions in the room detected by a heat source detector; and
detecting, at the predetermined time intervals, a heat source region of a human body,
wherein the detecting includes:
calculating a first heat source region by deleting an overlapping region of a latest human body-equivalent heat source region and a preceding human body-equivalent heat source region from the latest human body-equivalent heat source region, the latest human body-equivalent heat source region being a heat source region equivalent to a human body that is currently extracted in the extracting, the preceding human body-equivalent heat source region being a heat source region equivalent to a human body that is previously extracted in the extracting;
calculating a second heat source region by adding the first heat source region calculated and a preceding human body heat source region, the preceding human body heat source region being a heat source region of a human body that is previously detected in the detecting;
calculating a third heat source region that is an overlapping region of the latest human body-equivalent heat source region and the second heat source region calculated; and
detecting the third heat source region calculated as the heat source region of a human body in the room.

5. A program for causing a computer to perform the human detection method according to claim 4.
